# FASCICULE DE BREVET EUROPEEN

(11) **EP 1 464 682 B1**
(45) Date de publication et mention de la délivrance du brevet: **19.12.2007**
(21) Numéro de dépôt: 04356044.0
(22) Date de dépôt: 01.04.2004
(51) Int. Cl.: C09D 9/00

(54) **Composition décapante et utilisations**
Abbeizmittelzusammensetzung und Verwendungen
Stripping composition and uses

(30) Priorité: 04.04.2003 FR 0304217
(43) Date de publication de la demande: 06.10.2004
(73) Titulaire: l'Industrielle de Chimie Elaborée Française (LICEF S.A.), 38280 Villette d'Anthon (FR)
(72) Inventeur: Galea, Christian, 38460 Siccieu St Julien et Carisieu (FR)
(74) Mandataire: Guerre, Dominique

(56) Documents cités:
- EP-A- 0 908 780
- EP-A- 1 138 727
- DE-A- 4 014 747
- SU-A- 1 525 183
- US-A- 5 612 303
- DATABASE WPI Section Ch, Week 199037, Derwent Publications Ltd., London, GB; Class E14, AN 1990-281011 & SU 1 525 183 A (ZHINZHER I.A.) 30 Novembre 1989

## Description

La présente invention concerne le décapage chimique d'un support, par élimination d'un ou plusieurs revêtements de diverses natures et épaisseurs. Les domaines d'applications visés par l'invention sont très variés, et bien que, dans la présente description, l'invention soit particulièrement illustrée dans le secteur du bâtiment et du yachting, l'intérêt de l'invention ne se trouve pas limité à ces domaines, ses utilisations pouvant s'étendre à tous types d'industrie, mais aussi au grand public par exemple pour le décapage de meubles et objets en bois.

Pour illustrer un des domaines d'application d'une composition de décapage, citons le document, EP-A-0 908 780, qui décrit un procédé de préparation d'un film réticulé qui peut être utilisé comme film protecteur, film de matité ou comme couche d'isolation dans des éléments électroniques, ledit procédé comprenant une étape de décapage du substrat enduit de résine, avec une composition décapante. Celle-ci comprend un agent de décapage, éventuellement associé à un solvant à haut point d'ébullition.

Dans le domaine du bâtiment et notamment en façades, les revêtements couramment rencontrés sont de nature organique et sont des peintures d'imperméabilité de plus ou moins grande épaisseur, des revêtements plastiques épais (RPE), des revêtements décoratifs du type marbres talochés ou encore des films minces acryliques ou pliolite®.

Les décapants le plus souvent employés pour mettre à nu les supports en vue d'une restauration ou d'un nouveau traitement sont formulés à partir de solvants chlorés, efficaces, mais dangereux à l'usage, pour les utilisateurs et l'environnement. En plus des inconvénients résultant directement des solvants chlorés, ces compositions très volatiles contiennent un certain nombre de limitateurs d'évaporation tels que les paraffines, qui sont difficiles à évacuer, même par un lavage soigneux que ce soit à l'eau chaude ou à l'eau froide et qui peuvent engendrer des désordres importants sur les revêtements neufs en recouvrement, et en particulier sur les imperméabilités de façade acryliques ou styrène-acryliques.

On cherche à mettre au point des décapants exempts de solvants chlorés. Ainsi, selon la demande de brevet EP-A-1 138 727, on connaît une composition décapante pour le bâtiment, comprenant au moins un ester dibasique, un solvant aprotique dipolaire, un co-solvant choisi parmi l'anisole et le phénétole, un mélange d'agents de ramollissement, un épaississant cellulosique, une charge inorganique et un dispersant. Cette composition présente la viscosité d'une pâte et elle est appliquée en couche épaisse sur le support à décaper, puis on la laisse agir.

L'inconvénient des décapants de substitution destinés à remplacer les décapants à base de solvants chlorés réside dans leur efficacité encore insuffisante et variable en fonction de la nature des revêtements à éliminer. Ainsi, avant de s'assurer de l'intérêt d'un tel décapant, il convient de définir la nature du revêtement, ce qui n'est pas une opération facile par exemple quand la façade à décaper est ancienne et recouverte d'une succession de couches de différents revêtements.

Des solvants non chlorés sont utilisés dans le retrait de marquage de pièces métalliques. Ainsi, SU1525183 décrit un procédé d'élimination de peintures et laques de marquage de la surface métallique de condensateurs. Il comprend une étape de solubilisation par de l'acétate de benzyle, optionnellement chauffé, associée à une étape préalable ou simultanée de brossage mécanique, puis une étape de polissage avec de l'acide oxalique. Les essais démontrent qu'en l'absence de l'étape de brossage mécanique, le procédé n'est pas efficace.

On est donc toujours à la recherche d'une composition décapante, exempte de solvants chlorés, et au moins aussi performante que les compositions chlorées, de telle sorte que ces dernières restent encore utilisées en volumes importants.

La Demanderesse a mis au point une composition décapante répondant à ces critères. De manière surprenante, la composition s'est révélée efficace sur tous les types de supports rencontrés dans le domaine du bâtiment, notamment béton ou brique, mais aussi sur des supports polymère de type polyesters tels que ceux rencontrés dans le domaine du yachting, ainsi que sur d'autres supports comme le bois ou les métaux, sans risque d'endommagement du support traité et indépendamment de la nature du ou des revêtements à éliminer, ce qui lui confère un caractère quasi universel.

Un premier objet de l'invention est une composition décapante comprenant à titre d'ingrédient actif, au moins de l'acétate de benzyle et un solvant choisi parmi l'acétate de méthoxypropyle, le diacétone-alcool, la méthyl-éthyl-cétone, l'isophorone et le mélange de ceux-ci.

La Demanderesse a observé, de manière inattendue, que l'association de l'acétate de benzyle avec au moins l'un des solvants ci-dessus constituait l'ingrédient actif d'une composition efficace sur tous supports, n'engendrant aucune diffusion néfaste dans le support, et quel que soit le revêtement, la nécessité de déterminer la nature du revêtement avant utilisation devenant donc obsolète.

Par rapport aux décapants chlorés, une composition de l'invention ne nécessite aucun rinçage, supprimant tout risque de dégâts des eaux observés lors du décapage de façades par des compositions chlorées.

Une composition de l'invention préférée est ci-après décrite. Elle répond avantageusement à au moins l'une quelconque des caractéristiques exposées ci-après, éventuellement combinées :
- la proportion en poids de l'acétate de benzyle varie entre 15 et 60% et celle du solvant varie entre 4 et 25%, par rapport au poids total de la composition ;
- la composition comprend à titre de solvant au moins un mélange de diacétone-alcool et d'acétate de méthoxypropyle ; avantageusement cette composition comprend 15 à 60% d'acétate de benzyle, 2 à 15% de diacétone-alcool et 2 à 15% d'acétate de méthoxypropyle ;
- elle est efficace en l'absence de tout ester d'alkyle de l'acide oxyisobutyique, et de préférence elle en est exempte ;
- la composition comprend en outre au moins un agent de diffusion choisi parmi les solvants aprotiques dipolaires ; ceux-ci sont notamment choisis parmi le diméthylsulfoxyde (DMSO), la N-méthylpyrrolidone, le diméthylformamide, l'acétonitrile, la N-méthylmorpholine, la γ-butyrolactone, le diméthylacétamide et leurs mélanges et/ou leur proportion en poids varie de 5 à 25%, par rapport au poids total de la composition ;
- la composition comprend en outre au moins un activateur choisi parmi la diéthanolamine, la diéthylène-triamine, la diméthyléthanolamine, les amines quaternaires et leurs mélanges ; une proportion en poids avantageuse de l'activateur varie de 0,5 à 4%, par rapport au poids total de la composition ;
- la composition comprend en outre au moins un plastifiant, de préférence choisi parmi les esters dibasiques, comme les dialkylesters et leurs mélanges ; ils sont avantageusement choisis parmi les glutarates d'alkyle, les succinates d'alkyle et les adipates d'alkyle ; un plastifiant préféré est un diméthylester ou un mélange de diméthylesters ; sa proportion en poids peut varier de 8 à 25%, par rapport au poids total de la composition ;
- la composition comprend en outre au moins une charge inorganique, de préférence choisie parmi le phosphite de calcium, le carbonate de calcium, l'hydroxyde de calcium, l'argile, la bentonite et le talc, et/ou en une proportion en poids variant de 10 à 40%, par rapport au poids total de la composition ;
- la composition comprend en outre au moins un dispersant ; celui-ci est notamment choisi parmi les glucosides d'alcool gras, les polyglucosides de type esters de glucose et de sucrose, les éthers d'alkylpolyglucoside, les tensioactifs fluorés dérivés de polyamines perfluoroalkylées, l'ester phosphorique acide du 2-éthylhexanol, et leurs mélanges et/ou sa proportion en poids peut varier de 0,5 à 4%, par rapport au poids total de la composition ;
- la composition comprend en outre au moins un épaississant ; un épaississant adapté est un ester d'hydroxypropylméthyl cellulose ou un mélanges de ceux-ci, et une proportion en poids préférentielle varie de 0,2 à 3%, par rapport au poids total de la composition ;
- la composition est exempte d'eau ou sensiblement exempte d'eau au sens où elle n'en contient de préférence pas plus de 1 % en poids ;
- lorsqu'elle comprend au moins un épaississant et/ou une charge inorganique, les proportions de ceux-ci sont appropriées pour lui conférer une viscosité telle qu'elle se présente sous forme d'un gel ou d'une crème.

Une composition de l'invention peut être appliquée au rouleau, à la brosse carrée ou au pistolet. Compte tenu de sa texture, on peut la laisser agir, de préférence sur une période variant de 5 minutes à 2 heures trente, en fonction du ou des revêtements à éliminer. Une telle composition est très avantageuse car elle présente un temps d'ouverture long pouvant s'étaler sur au moins 24 heures. Pour des revêtements de grande épaisseur, le temps d'ouverture peut même atteindre 48 heures. On peut ainsi appliquer la composition sur le support à décaper, laisser agir et n'entamer le retrait de la composition et des débris du revêtement que le jour suivant, sans risque de séchage de la composition.

La composition et les débris du ou des revêtements à l'état de lambeaux peuvent être grattés à la spatule et le support ainsi décapé à nu est prêt pour un traitement.

Un autre objet de l'invention réside dans l'utilisation de l'acétate de benzyle comme ingrédient actif pour obtenir une composition décapante, en particulier en combinaison avec un autre solvant, par exemple un solvant oxygéné.

D'autres objets de l'invention concernent des utilisations privilégiées d'une composition décapante de l'invention, pour obtenir une composition décapante destinée au domaine du bâtiment, ou pour obtenir une composition pour le décapage des carènes de bateaux, pour l'élimination du revêtement anti-fouling.

Les exemples ci-après illustrent de manière non limitative des compositions de l'invention.

### Exemple 1 : composition décapante pour le bâtiment

Les proportions indiquées ci-après sont exprimées en pourcentage en poids par rapport au poids total de la composition :

| | |
|---|---|
| Acétate de benzyle | 34 |
| Diacétone-alcool | 10 |
| DMSO | 18 |
| Acétate de méthoxypropyle | 6 |
| DBE® | 10 |
| Diéthanolamine | 0,5 |
| Glucopon® 225 | 1,5 |
| Methocel® | 1 |
| Phosphite de calcium | 19 |

Une composition de l'invention telle que décrite ci-dessus est préparée de préférence sous agitation. Sa formulation est aisément réalisée par l'homme du métier compétent.

### Exemple 2 : composition décapante pour le yachting

Les proportions indiquées ci-après sont exprimées en pourcentage en poids par rapport au poids total de la composition :

| | |
|---|---|
| Acétate de benzyle | 40 |
| Diacétone-alcool | 10 |
| Acétate de méthoxypropyle | 10 |
| DBE® | 15 |
| Fluotan® 830 | 1 |
| Chlorure de benzalkonium | 0,5 |
| Methocel® | 1 |
| Phosphite de calcium | 22,5 |

Comme il ressort de cette formulation, une composition décapante destinée au traitement de coques polyester de bateau est avantageusement dépourvue de solvant aprotique dipolaire, pour limiter tout risque de diffusion du solvant à coeur du polymère.

Dans une telle application n'encourant aucun risque de dégâts des eaux, le support, à savoir la coque est de préférence rincée à l'eau après décapage.

## Revendications

1. Composition décapante comprenant à titre d'ingrédient actif, au moins de l'acétate de benzyle et un solvant choisi parmi l'acétate de méthoxypropyle, le diacétone-alcool, la méthyl-éthyl-cétone, l'isophorone et le mélange de ceux-ci.

2. Composition selon la revendication 1, **caractérisée en ce que** la proportion en poids de l'acétate de benzyle varie entre 15 et 60% et celle du solvant varie entre 4 et 25%, par rapport au poids total de la composition.

3. Composition selon la revendication 2, **caractérisée en ce qu'**elle comprend 15 à 60% d'acétate de benzyle, 2 à 15% de diacétone-alcool et 2 à 15% d'acétate de méthoxypropyle.

4. Composition selon l'une quelconque des revendications 1 à 3, **caractérisée en ce qu'**elle comprend en outre au moins un agent de diffusion choisi parmi les solvants aprotiques dipolaires.

5. Composition selon la revendication 4, **caractérisée en ce que** les solvants aprotiques dipolaires sont choisis parmi le diméthylsulfoxyde (DMSO), la N-méthylpyrrolidone, le diméthylformamide, l'acétonitrile, la N-méthylmorpholine, la γ-butyrolactone, le diméthylacétamide et leurs mélanges.

6. Composition selon la revendication 4 ou 5, **caractérisée en ce que** la proportion en poids de l'agent de diffusion varie de 5 à 25%, par rapport au poids total de la composition.

7. Composition selon l'une quelconque des revendications 1 à 6, **caractérisée en ce qu'**elle comprend en outre au moins un activateur choisi parmi la diéthanolamine, la diéthylène-triamine, la diméthyléthanolamine, les amines quaternaires et leurs mélanges.

8. Composition selon la revendication 7, **caractérisée en ce que** la proportion en poids de l'activateur varie de 0,5 à 4%, par rapport au poids total de la composition.

9. Composition selon l'une quelconque des revendications 1 à 8, **caractérisée en ce qu'**elle comprend en outre au moins un plastifiant.

10. Composition selon la revendication 9, **caractérisée en ce que** le plastifiant est choisi parmi les esters dibasiques.

11. Composition selon la revendication 10, **caractérisée en ce que** le plastifiant est un dialkylester ou un mélange de dialkylesters choisi parmi les glutarates d'alkyle, les succinates d'alkyle et les adipates d'alkyle.

12. Composition selon la revendication 11, **caractérisée en ce que** le plastifiant est un diméthylester ou un mélange de diméthylesters.

13. Composition selon l'une quelconque des revendications 9 à 12, **caractérisée en ce que** la proportion en poids du plastifiant varie de 8 à 25%, par rapport au poids total de la composition.

14. Composition selon l'une quelconque des revendications 1 à 13, **caractérisée en ce qu'**elle comprend en outre au moins une charge inorganique.

15. Composition selon la revendication 14, **caractérisée en ce que** la charge inorganique est choisie parmi le phosphite de calcium, le carbonate de calcium, l'hydroxyde de calcium, l'argile, la bentonite et le talc.

16. Composition selon la revendication 14 ou 15, **caractérisée en ce que** la proportion en poids de la charge inorganique varie de 10 à 40%, par rapport au poids total de la composition.

17. Composition selon l'une quelconque des revendications 1 à 16, **caractérisée en ce qu'**elle comprend en outre au moins un dispersant.

18. Composition selon la revendication 17, **caractérisée en ce que** le dispersant est choisi parmi les glucosides d'alcool gras, les polyglucosides de type esters de glucose et de sucrose, les éthers d'alkylpolyglucoside, les tensioactifs fluorés dérivés de polyamines perfluoroalkylées, l'ester phosphorique acide du 2-éthylhexanol, et leurs mélanges.

19. Composition selon la revendication 18, **caractérisée en ce que** la proportion en poids du dispersant varie de 0,5 à 4%, par rapport au poids total de la composition.

20. Composition selon l'une quelconque des revendications 1 à 19, **caractérisée en ce qu'**elle comprend en outre au moins un épaississant.

21. Composition selon la revendication 20, **caractérisée en ce que** l'épaississant est un ester d'hydroxypropylméthyl cellulose ou un mélanges de ceux-ci.

22. Composition selon la revendication 20 ou 21, **caractérisée en ce que** la proportion en poids du dispersant varie de 0,2 à 3%, par rapport au poids total de la composition.

23. Composition selon l'une quelconque des revendications 1 à 22, **caractérisée en ce qu'**elle est exempte d'eau.

24. Composition selon l'une quelconque des revendications 1 à 23, **caractérisée en ce qu'**elle est sous forme d'un gel ou d'une crème.

25. Utilisation de l'acétate de benzyle comme ingrédient actif pour obtenir une composition décapante destinée au décapage d'un support choisi parmi le béton, la brique le bois et les polyester, dans le domaine du bätiment et du yachting.

26. Utilisation d'une composition décapante selon l'une quelconque des revendications 1 à 24, pour obtenir une composition décapante destinée au domaine du bâtiment.

27. Utilisation d'une composition décapante selon l'une quelconque des revendications 1 à 24, pour obtenir une composition pour le décapage des carènes de bateaux.

## Claims

1. Stripping composition comprising, as active ingredient, at least benzyl acetate and a solvent chosen from methoxypropyl acetate, diacetone alcohol, methyl ethyl ketone, isophorone and the mixture of these.

2. Composition according to Claim 1, **characterized in that** the proportion by weight of the benzyl acetate varies between 15 and 60% and that of the solvent varies between 4 and 25%, with respect to the total weight of the composition.

3. Composition according to Claim 2, **characterized in that** it comprises 15 to 60% of benzyl acetate, 2 to 15% of diacetone alcohol and 2 to 15% of methoxypropyl acetate.

4. Composition according to any one of Claims 1 to 3, **characterized in that** it additionally comprises at least one diffusion agent chosen from dipolar aprotic solvents.

5. Composition according to Claim 4, **characterized in that** the dipolar aprotic solvents are chosen from dimethyl sulphoxide (DMSO), N-methylpyrrolidone, dimethylformamide, acetonitrile, N-methylmorpholine, γ-butyrolactone, dimethylacetamide and their mixtures.

6. Composition according to Claim 4 or 5, **characterized in that** the proportion by weight of the diffusion agent varies from 5 to 25% with respect to the total weight of the composition.

7. Composition according to any one of Claims 1 to 6, **characterized in that** it additionally comprises at least one activator chosen from diethanolamine, diethylenetriamine, dimethylethanolamine, quaternary amines and their mixtures.

8. Composition according to Claim 7, **characterized in that** the proportion by weight of the activator varies from 0.5 to 4% with respect to the total weight of the composition.

9. Composition according to any one of Claims 1 to 8, **characterized in that** it additionally comprises at least one plasticizer.

10. Composition according to Claim 9, **characterized in that** the plasticizer is chosen from dibasic esters.

11. Composition according to Claim 10, **characterized in that** the plasticizer is a dialkyl ester or a mixture of dialkyl esters chosen from alkyl glutarates, alkyl succinates and alkyl adipates.

12. Composition according to Claim 11, **characterized in that** the plasticizer is a dimethyl ester or a mixture of dimethyl esters.

13. Composition according to any one of Claims 9 to 12, **characterized in that** the proportion by weight of the plasticizer varies from 8 to 25% with respect to the total weight of the composition.

14. Composition according to any one of Claims 1 to 13, **characterized in that** it additionally comprises at least one inorganic filler.

15. Composition according to Claim 14, **characterized in that** the inorganic filler is chosen from calcium phosphite, calcium carbonate, calcium hydroxide, clay, bentonite and talc.

16. Composition according to Claim 14 or 15, **characterized in that** the proportion by weight of the inorganic filler varies from 10 to 40% with respect to the total weight of the composition.

17. Composition according to any one of Claims 1 to 16, **characterized in that** it additionally comprises at least one dispersant.

18. Composition according to Claim 17, **characterized in that** the dispersant is chosen from fatty alcohol glucosides, polyglucosides of glucose ester and sucrose ester type, alkylpolyglucoside ethers, fluorosurfactants derived from perfluoroalkylated polyamines, the acidic phosphoric ester of 2-ethylhexanol, and their mixtures.

19. Composition according to Claim 18, **characterized in that** the proportion by weight of the dispersant varies from 0.5 to 4% with respect to the total weight of the composition.

20. Composition according to any one of Claims 1 to 19, **characterized in that** it additionally comprises at least one thickener.

21. Composition according to Claim 20, **characterized in that** the thickener is a hydroxypropylmethylcellulose ester or a mixture of these.

22. Composition according to Claim 20 or 21, **characterized in that** the proportion by weight of the dispersant varies from 0.2 to 3% with respect to the total weight of the composition.

23. Composition according to any one of Claims 1 to 22, **characterized in that** it is devoid of water.

24. Composition according to any one of Claims 1 to 23, **characterized in that** it is in the form of a gel or of a cream.

25. Use of benzyl acetate as active ingredient for obtaining a stripping composition intended for the stripping of a support chosen from concrete, brick, wood and polyesters, in the construction field and the yachting field.

26. Use of a stripping composition according to any one of Claims 1 to 24 for obtaining a stripping composition intended for the construction field.

27. Use of a stripping composition according to any one of Claims 1 to 24 for obtaining a composition for the stripping of the lower part of the hulls of boats.

## Patentansprüche

1. Beizzusammensetzung, umfassend als aktiven Inhaltsstoff mindestens Benzylacetat und ein Lösungsmittel, das unter Methoxypropylacetat, Diacetonalkohol, Methylethylketon, Isophoron und der Mischung derselben ausgewählt wird.

2. Zusammensetzung nach Anspruch 1, **dadurch gekennzeichnet, dass** der Gewichtsanteil des Benzylacetats zwischen 15 und 60 % und jener des Lösungsmittels zwischen 4 und 25 % bezogen auf das Gesamtgewicht der Zusammensetzung variiert.

3. Zusammensetzung nach Anspruch 2, **dadurch gekennzeichnet, dass** sie 15 bis 60 % Benzylacetat, 2 bis 15 % Diacetonalkohol und 2 bis 15 % Methoxypropylacetat umfasst.

4. Zusammensetzung nach einem der Ansprüche 1 bis 3, **dadurch gekennzeichnet, dass** sie ferner mindestens ein Diffusionsmittel umfasst, das unter den dipolaren aprotischen Lösungsmitteln ausgewählt wird.

5. Zusammensetzung nach Anspruch 4, **dadurch gekennzeichnet, dass** die dipolaren aprotischen Lösungsmittel unter Dimethylsulfoxid (DMSO), N-Methylpyrrolidon, Dimethylformamid, Acetonitril, N-Methylmorpholin, γ-Butyrolacton, Dimethylacetamid und ihren Mischungen ausgewählt wird.

6. Zusammensetzung nach Anspruch 4 oder 5, **dadurch gekennzeichnet, dass** der Gewichtsanteil des Diffusionsmittels zwischen 5 und 25 % bezogen auf das Gesamtgewicht der Zusammensetzung variiert.

7. Zusammensetzung nach einem der Ansprüche 1 bis 6, **dadurch gekennzeichnet, dass** sie ferner mindestens einen Aktivator umfasst, der unter Diethanolamin, Diethylentriamin, Dimethylethanolamin, den quaternären Aminen und ihren Mischungen ausgewählt wird.

8. Zusammensetzung nach Anspruch 7, **dadurch gekennzeichnet, dass** der Gewichtsanteil des Aktivators zwischen 0,5 und 4 % bezogen auf das Gesamtgewicht der Zusammensetzung variiert.

9. Zusammensetzung nach einem der Ansprüche 1 bis 8, **dadurch gekennzeichnet, dass** sie ferner mindestens einen Plastifikator umfasst.

10. Zusammensetzung nach Anspruch 9, **dadurch gekennzeichnet, dass** der Plastifikator unter den dibasischen Estern ausgewählt wird.

11. Zusammensetzung nach Anspruch 10, **dadurch gekennzeichnet, dass** der Plastifikator ein Dialkylester oder eine Mischung aus Dialkylestern ist, die unter den Alkylglutaraten, den Alkylsuccinaten und den Alkyladipaten ausgewählt werden.

12. Zusammensetzung nach Anspruch 11, **dadurch gekennzeichnet, dass** der Plastifikator ein Dimethylester oder eine Mischung von Dimethylestern ist.

13. Zusammensetzung nach einem der Ansprüche 9 bis 12, **dadurch gekennzeichnet, dass** der Gewichtsanteil des Plastifikators zwischen 8 und 25 % bezogen auf das Gesamtgewicht der Zusammensetzung variiert.

14. Zusammensetzung nach einem der Ansprüche 1 bis 13, **dadurch gekennzeichnet, dass** sie ferner mindestens einen anorganischen Füllstoff umfasst.

15. Zusammensetzung nach Anspruch 14, **dadurch gekennzeichnet, dass** der anorganische Füllstoff unter Kalziumphosphit, Kalziumkarbonat, Kalziumhydroxid, Ton, Bentonit und Talk ausgewählt wird.

16. Zusammensetzung nach Anspruch 14 oder 15, **dadurch gekennzeichnet, dass** der Gewichtsanteil des anorganischen Füllstoffes zwischen 10 und 40 % bezogen auf das Gesamtgewicht der Zusammensetzung variiert.

17. Zusammensetzung nach einem der Ansprüche 1 bis 16, **dadurch gekennzeichnet, dass** sie ferner mindestens ein Dispergiermittel umfasst.

18. Zusammensetzung nach Anspruch 17, **dadurch gekennzeichnet, dass** das Dispergiermittel unter den Fettalkoholglukosiden, den Polyglukosiden des Typs Glukose- und Saccharoseester, den Alkylpolyglukosidethern, den fluorhaltigen Tensiden, die Perfluoralkylpolyaminderivate darstellen, dem sauren Phosphorester des 2-Ethylhexanols und ihren Mischungen ausgewählt wird.

19. Zusammensetzung nach Anspruch 18, **dadurch gekennzeichnet, dass** der Gewichtsanteil des Dispergiermittels zwischen 0,5 und 4 % bezogen auf das Gesamtgewicht der Zusammensetzung variiert.

20. Zusammensetzung nach einem der Ansprüche 1 bis 19, **dadurch gekennzeichnet, dass** sie ferner mindestens ein Verdickungsmittel umfasst.

21. Zusammensetzung nach Anspruch 20, **dadurch gekennzeichnet, dass** das Verdickungsmittel ein Hydroxypropylmethylzelluloseester oder eine Mischung derselben ist.

22. Zusammensetzung nach Anspruch 20 oder 21, **dadurch gekennzeichnet, dass** der Gewichtsanteil des Dispergiermittels von 0,2 bis 3 % bezogen auf das Gesamtgewicht der Zusammensetzung variiert.

23. Zusammensetzung nach einem der Ansprüche 1 bis 22, **dadurch gekennzeichnet, dass** sie frei von Wasser ist.

24. Zusammensetzung nach einem der Ansprüche 1 bis 23, **dadurch gekennzeichnet, dass** sie in Form eines Gels oder einer Creme vorhanden ist.

25. Verwendung des Benzylacetats als aktiven Inhaltsstoff, um eine Beizzusammensetzung zu erhalten, die für das Beizen eines Träger bestimmt ist, der unter Beton, Ziegel, Holz und Polyestern im Bau- und Yachtwesen ausgewählt wird.

26. Verwendung einer Beizzusammensetzung nach einem der Ansprüche 1 bis 24, um eine Beizzusammensetzung zu erhalten, die für das Bauwesen bestimmt ist.

27. Verwendung einer Beizzusammensetzung nach einem der Ansprüche 1 bis 24, um eine Zusammensetzung zum Beizen der Schiffskiele zu erhalten.
